# EUROPEAN PATENT APPLICATION

(11) **EP 2 224 577 A1**
(43) Date of publication of application: **01.09.2010**
(21) Application number: 08861645.3
(22) Date of filing: 08.12.2008
(51) Int. Cl.: H02K 1/18, F04C 29/00, H02K 1/14

(54) **ARMATURE MAGNETIC CORE, ARMATURE, ROTATING ELECTRIC MACHINE, AND COMPRESSOR**

(30) Priority: 17.12.2007 JP 2007324859; 18.07.2008 JP 2008187545
(71) Applicant: Daikin Industries, Ltd., Osaka 530-8323 (JP)
(72) Inventor: ASANO, Yoshinari, Kusatsu-shi Shiga 525-8526 (JP); YASUMOTO, Ryuuji, Kusatsu-shi Shiga 525-8526 (JP); KIFUJI, Nobuyuki, Kusatsu-shi Shiga 525-8526 (JP)
(74) Representative: Goddar, Heinz J.
(86) International application number: PCT/JP2008/072270
(87) International publication number: WO 2009/078300

(57) **Abstract**

The present invention relates to an armature core (10) formed by laminating a plurality of magnetic plates (12) punched into a predetermined shape, which includes a prism portion (14) around which an armature coil (30) is wound and a first rectangular solid portion (16) buried in a recessed portion (22) of a yoke (20). A shape in cross section of the prism portion (14) is formed to have a substantially trapezoidal shape on a surface with a rotation axis (Q) being a normal, whereas a shape in cross section of the first rectangular solid portion (16) is formed to have a substantially rectangular shape on the surface. In punching the magnetic plates (12), a punching step for a part constituting the prism portion (14) and a punching step for a part constituting the first rectangular solid portion (16) perform separately. In the vicinity of a boundary between both parts, regions capable of being punched with molds that are used for the punching steps are caused to overlap each other by a predetermined width, to thereby avoid stress concentration on a boundary region.

## Description

### Technical Field

The present invention relates to an armature core and an armature, and particularly, is applicable to an axial gap rotary electric machine.

### Background Art

A rotary electric machine includes an armature and a field element. In particular, in an axial gap rotary electric machine, an armature and a field element are disposed so as to be opposed to each other along a rotation axis, through an air gap extending along a surface perpendicular to the rotation axis. The armature includes a yoke, teeth provided to the yoke, and a coil that is wound with the teeth being a core. The field element is rotated by a rotating magnetic field generated in the armature.

A magnetic flux flows through the armature by causing an alternating current to flow through the coil, whereby the magnetic flux causes an eddy current in the yoke and the teeth.

The magnetic flux flows along the rotation axis in the teeth, and thus in a case where electromagnetic steel plates laminated along a direction parallel to the rotation axis are employed as the teeth, the magnetic flux cuts across an interface of the laminated electromagnetic steel plates. In this case, a magnetic resistance of a magnetic path in the teeth increases, and an eddy current is easily generated in the teeth. On the other hand, when electromagnetic steel plates laminated along a direction perpendicular to the rotation axis are used as the teeth, a magnetic flux that cuts across the interface of the electromagnetic steel plates can be reduced, which reduces an eddy current. The technology as described above is disclosed in Patent Document 1.

When opposed surfaces of the adjacent teeth are made to be parallel to each other, a space factor of an armature coil is improved. In a case where the above-mentioned teeth are achieved by laminated electromagnetic steel plates, the electromagnetic steel plates need to be punched in different shapes. The technology as described above is disclosed in Patent Document 2 and Patent Document 3.

Patent Document 1: WO 03/047070
Patent Document 2: Japanese Patent Application Laid-Open No. 2005-287217
Patent Document 3: Japanese Patent Application Laid-Open No. 2005-224054

### Disclosure of Invention

### Problem to be Solved by the Invention

In the technologies disclosed in the above-mentioned Patent Document 1 to Patent Document 3, the teeth formed of laminated electromagnetic steel plates are buried in the holes provided in the yoke. When the opposed surfaces of the adjacent teeth are made to be parallel to each other, the surfaces become non-parallel to the direction in which the electromagnetic steel plates extend. In a case where the electromagnetic steel plates are punched in different shapes and laminated to form the teeth for achieving the above-mentioned non-parallel surfaces, if examined closely, those surfaces have a step-like shape.

Normally, the holes provided in the yoke do not correspond to the above-mentioned step-like shape. Accordingly, in a case where the teeth are buried in the holes provided in the yoke, a triangular gap (clearance) with a thickness of the electromagnetic steel plate being one side is generated between the non-parallel surfaces and the holes. This clearance becomes an air gap for the magnetic flux extending from the teeth to the yoke, and a magnetic resistance increases, accordingly leading to an increase in copper loss. In the above-mentioned Patent Document 1 to Patent Document 3, there is no mention about the above-mentioned clearance.

In view of the above-mentioned problem, an object of the present invention is to provide the technology of reducing a magnetic resistance between teeth and a yoke without impairing a space factor of a coil.

### Means to Solve the Problem

In order to solve the above-mentioned problem, a first invention relates to an armature core (10, 10a, 10c) formed by laminating a plurality of first magnetic plates (12a, 12b, 12c), which includes: a prism portion (14) having a length (WB) in a first direction perpendicular to a lamination direction in which the first magnetic plates are laminated and a height in a second direction (Q) perpendicular to the lamination direction and the first direction, the length gradually increasing a width in all or part in the lamination direction; and a first rectangular solid portion (16, 16a, 16c) being adjacent to the prism portion in the second direction and having a uniform length (WL) in the first direction.

According to a second invention, in the first invention, the length (WL) of the first rectangular solid portion (16, 16a) in the first direction is equal to or smaller than a minimum value of the length (WB) of the prism portion in the first direction.

According to a third invention, in the first invention, a length (WLc) of the first rectangular solid portion (16c) in the first direction is larger than a maximum value of the length (WB) of the prism portion (14) in the first direction.

According to a fourth invention, in any one of the first to third inventions, the armature core further includes a flanged portion (18a) at an end portion of the first rectangular solid portion (16a) on a side opposite to the prism portion (14); and a length (WS) of the flanged portion in the first direction is larger than the length (WL) of the first rectangular solid portion in the first direction.

A fifth invention relates to an armature (40, 40a, 40c, 40d, 40e, 40f) including: the armature core (10, 10a, 10c) according to any one of the first to fourth inventions; a yoke (20, 20a, 20c, 20d, 20e, 20f) including a recessed portion (22, 22a, 22c, 22d, 22e, 22f) in which the first rectangular solid portion is buried; and an armature coil (30, 30a, 30c) wound around the prism portion, wherein: a plurality of the armature cores are circularly arranged, on the yoke, with a rotation axis (Q) parallel to the second direction as a center; and edges of the prism portions (14) adjacent to each other are formed or arranged so as to be parallel to each other, the edges being opposed to each other.

According to a sixth invention, in the fifth invention, the armature further comprises an elastic member (32; 32d, 32e, 32f) urging the first rectangular solid portion (16, 16d) buried in the recessed portion (22d, 22e, 22f) in a radial direction with the rotation axis (Q) being a center.

According to a seventh invention, in the fifth or sixth invention, the armature core (10d, 10e, 10f) further includes a column portion (15d) being adjacent to the prism portion (14) in the second direction (Q) and having the length (WL) in the first direction, the length decreasing along the lamination direction; and the elastic member (32d, 32e) performs urging in the decreasing direction.

According to an eighth invention, in the fifth or sixth invention, the armature core (10e) further includes, on a side closer to the rotation axis (Q) than the first rectangular solid portion (16d), a second rectangular solid portion (17d) having the length (WL) in the first direction smaller than that of the first rectangular solid portion; and a length of the recessed portion (22d, 22e, 22f) fitted with the second rectangular solid portion in the lamination direction is larger than a length of the second rectangular solid portion in the lamination direction.

According to a ninth invention, in any one of the sixth to eighth inventions, the first magnetic plate (12u) having an end portion in the lamination direction among the first magnetic plates (12d) includes the elastic member (32e).

According to a tenth invention, in the ninth invention, the elastic member (32d) includes a projection (32e) projecting, at the end portion in the lamination direction, from the first magnetic plate (12u) toward the recessed portion (22d).

An eleventh invention relates to an armature (40, 40a) including: the armature core (10, 10a) according to the second invention; and an armature coil (30, 30a) including a separately prepared air-core coil attached to the prism portion (14).

A twelfth invention relates to an armature (40c) including: the armature core (10c) according to any one of the first to fourth inventions; and an armature coil (30c) series-wounded around the prism portion (14) directly or via an insulator.

According to a thirteenth invention, in any one of the fifth to twelfth inventions, the yoke (20, 20c) is formed by laminating a plurality of second magnetic plates (24, 24c) in the rotation axis (Q) direction.

According to a fourteenth invention, in any one of the sixth to eighth inventions, the yoke (20e) is formed by laminating a plurality of second magnetic plates (24e) in the rotation axis (Q) direction; and at least one of the plurality of second magnetic plates includes a projection (32q) projecting from an edge of the recessed portion (22e) toward the recessed portion.

According to a fifteenth invention, in the fourteenth invention, a length (L1) of the projection (32q) from the edge of the projection (22e) is smaller than a depth (L0) of the recessed portion.

According to a sixteenth invention, in the fourteenth or fifteenth invention, the second magnetic plate on one side in the rotation axis (Q) direction with respect to the second magnetic plate including the projection (32q) among the second magnetic plates (24e) includes a notch (34e) accommodating the projection at a position corresponding to the projection.

According to a seventeenth invention, in any one of the fifth to seventh inventions, the yoke (20a) is formed by powder compacting.

According to an eighteenth invention, in any one of the fifth to seventeenth inventions, the yoke (20a) includes a recessed portion (22a) in which the first rectangular solid portion (16) is buried; and the recessed portion is open also toward an outer side in the radial direction with the rotation axis (Q) being a center.

According to a nineteenth invention, in any one of the fifth to seventeenth inventions, the yoke (20c) includes a recessed portion (22c) in which the first rectangular solid portion (16c) is buried; and the recessed portion is open also toward an inner side in the radial direction with the rotation axis (Q) being a center.

According to a twentieth invention, in any one of the fifth to seventeenth inventions, a length (WL, WLc) of the first rectangular solid portion (16, 16c) in the first direction is equal to or smaller than a length (2πr/n, 2πc/nc) obtained by dividing a circumference of a circle (2πr, 2πrc) by the number (n, nc) of the armature cores buried in the recessed portions (22, 22c) of the yoke (20, 20c), where the circle having, as a radius, a length (r, rc) from the rotation axis (Q) being a center to a position of the armature core (10, 10a, 10c) closest to the rotation axis.

According to a twenty-first invention, in the twentieth invention, the length (WLc) of the first rectangular solid portion (16c) in the first direction is substantially equal to the length (2πrc/nc) obtained by dividing the circumference of a circle 2πrc) by the number (nc) of the armature cores buried in the recessed portions (22c) of the yoke (20c), where the circle having, as a radius, the length (rc) from the rotation axis (Q) being the center to the position of the armature core (10c) closest to the rotation axis.

According to a twenty-second invention, in the twenty-first invention, the yoke (20c) is short-circuited on an outer side in the radial direction than the armature core (10c) and on a side opposite to a side on which the armature cores are buried in the yoke.

According to a twenty-third invention, in any one of the fifth to twenty-second inventions, the yoke (20c) further includes a bottom (26c) on the side opposite to the side on which the armature cores (10c) are buried.

According to a twenty-fourth' invention, in the thirteenth and twenty-third inventions, the bottom (26c) and the second magnetic plates (24c) are composed of thin plates laminated in the rotation axis (Q) direction; and a thickness of the thin plate constituting the bottom in the rotation axis direction is larger than a thickness of the thin plate constituting one of the second magnetic plates in the rotation axis direction.

According to a twenty-fifth invention, in the twenty-fourth invention, the bottom (26c) is formed of non-magnetic metal.

A twenty-sixth invention relates to a rotary electric machine (60) including: the armature (40, 40a, 40c) according to any one of the fifth to twenty-fifth inventions; and a field element (50) disposed so as to be opposed to the armature core (10, 10a, 10c) along the rotation axis (Q).

According to a twenty-seventh invention, in the twenty-sixth invention, the field element (50) includes a magnet (52) generating a magnetic field flux.

A twenty-eighth invention relates to a compressor (70) in which the rotary electric machine (60) according to the twenty-sixth or twenty-seventh invention is mounted.

### Effects of the Invention

According to the first invention, the armature core includes a plurality of laminated first magnetic plates, and thus is capable of reducing an eddy current. By winding the armature coil around the prism portion and burying the first rectangular solid portion in the yoke, an axial gap armature can be obtained. When a plurality of armature cores are provided in the yoke, a side on which the prism portion has a larger width is provided on the outer circumferential side, whereby the armature cores efficiently occupy the space. Moreover, by employing the first rectangular solid portion for the portion buried in the yoke, a clearance between the recessed portion included in the yoke and the first rectangular solid portion can be reduced irrespective of the shape of the prism portion, leading to a reduction in magnetic resistance between the teeth and the yoke.

According to the second invention, it is easy to attach a separately prepared air-core coil to the prism portion from the rectangular solid side. In addition, the first magnetic plate can be punched with ease.

According to the third invention, an area in cross section of the first rectangular solid portion does not become smaller with respect to the prism portion, and thus the magnetic flux of the prism portion flows into the yoke portion via the first rectangular solid portion without causing magnetic saturation. Accordingly, a magnetic resistance between the armature core and the yoke is small. In addition, the first magnetic plate can be punched with ease.

According to the fourth invention, when the flanged portion is caused to abut the yoke portion described below in the rotation axis direction, it is possible to prevent or suppress the armature core from becoming detached from the yoke even if the armature core is attracted from the prism portion side.

According to the fifth invention, when the coil having the uniform width is provided in a gap between the prism portions, the gap between the armature core and the yoke is reduced while improving a space factor of the armature coil, leading to an increase in fastening strength therebetween and a reduction in magnetic resistance therebetween.

According to the sixth invention, the armature core can be firmly held by the yoke, which prevents or suppresses rattling.

According to the seventh invention, a contact area between the armature core and the recessed portion in the first direction can be increased, which reduces a gap of the magnetic flux flowing in the first direction.

According to the eighth invention, the armature core is urged by the elastic member, and thus a contact area between the armature core and the recessed portion in the first direction can be increased, which reduces a gap of the magnetic flux flowing in the first direction.

According to the ninth invention, in a case where the armature core is buried in the recessed portion, part of the recessed portion can push and bend the elastic member with ease.

According to the tenth invention, in a case where the armature core is buried in the recessed portion, part of the recessed portion pushes and bends the projection. Accordingly, the projection can be employed as the elastic member, which facilitates manufacture.

According to the eleventh invention, an air-core coil having a high space factor is prepared separately, which can be employed as an armature coil.

According to the twelfth invention, the armature coil can be firmly fastened to the armature core, which prevents or suppresses winding failure.

According to the thirteenth invention, the yoke can be formed of electromagnetic steel plates having little iron loss.

According to the fourteenth invention, in a case where the armature core is buried in the recessed portion, part of the armature core pushes and bends the projection. Accordingly, the projection can be employed as the elastic member, which facilitates manufacture.

According to the fifteenth invention, in a case where the recessed portion does not penetrate through the yoke, when the armature core is buried in the recessed portion, it is possible to prevent the elastic member from being sandwiched between the bottom of the recessed portion and the bottom of the armature core.

According to the sixteenth invention, the pushed and bent projection is accommodated in the notch, whereby the gap between the armature core and the recessed portion can be reduced by the thickness of the projection, that is, the thickness of the magnetic plate including the projection.

According to the seventeenth invention, the natural frequency is higher compared with the case where laminated steel plates having insufficient adherence between laminated layers are used for formation, which increases vibration resistance. In particular, there is obtained a smooth flow of the magnetic flux to the side (bottom of the yoke) opposite to the side on which the armature core is buried in the yoke. In particular, this is suitable for the case where the armature core according to the second invention is employed.

According to the eighteenth invention, the first rectangular solid portion can be inserted from the outer side in the radial direction, and thus the armature core is easily buried in the recessed portion. In particular, this is suitable for the case where the armature core according to the fourth invention is employed.

According to the nineteenth invention, the first rectangular solid portion can be inserted from the inner side in the radial direction, and thus the armature core is easily buried in the recessed portion. In particular, this is suitable for the case where the armature core according to the fourth invention is employed. Further, compared with the tenth invention, in the case where the armature rotates, this is advantageous in that the armature core is hard to become detached from the recessed portion even when the centrifugal force is exerted on the armature core by rotation.

According to the twentieth invention, the armature cores can be buried in the yoke without the first rectangular solid portions of the adjacent armature cores interfering with each other.

According to the twenty-first invention, a large amount of magnetic flux linkage can be obtained with effective use of the space that one first rectangular solid portion can occupy without interfering with the other first rectangular solid portion, and the back yoke does not cover the entire first rectangular solid portion of one armature core. Therefore, an eddy current surrounding the first rectangular solid portion is not generated in the back yoke.

According to the twenty-second invention, in the case where the armature rotates, the short-circuited part on the outer side of the yoke in the radial direction can suppress the armature core from becoming detached or moving even when the centrifugal force is exerted on the armature core by rotation.

According to the twenty-third invention, the armature core can be held reliably.

According to the twenty-fourth invention, the armature core can be held more reliably. In addition, the strength of the bottom that is preferably used for securing strength can be increased while reducing iron loss of the second magnetic plate that is preferably used as a magnetic path.

According to the twenty-fifth invention, even when the twenty-fourth invention is employed, the eddy current can be reduced by preventing the magnetic flux from flowing through the bottom.

According to the twenty-sixth invention, an output of the rotary electric machine is increased.

According to the twenty-seventh invention, though the magnetic flux flowing through the teeth contains a large amount of harmonics and the magnetic flux density is increased, torque can be generated with high efficiency because the effect of reducing iron loss by the teeth is high.

According to the twenty-eighth invention, a rotary electric machine that is small in size and has high torque is employed, whereby loss in compressing a refrigerant is small. In particular, this contributes to a further reduction in copper loss while reducing iron loss, and thus power consumption can be reduced by applying the rotary electric machine to an air conditioner or a compressor for refrigeration machine that is rotated at low speed and has a high ratio of steady operation.

The object, features, aspects, and advantages of the present invention will be more apparent from the following detailed description in conjunction with the attached drawings.

### Brief Description of Drawings

[FIG. 1] An exploded perspective view of an armature according to a first embodiment of the present invention.
[FIG. 2] An assembly view of the armature.
[FIG. 3] A view describing an example of punching a first magnetic plate.
[FIG. 4] An exploded perspective view of an armature according to a second embodiment of the present invention.
[FIG. 5] A view describing an example of punching a first magnetic plate.
[FIG. 6] A partially enlarged view of the armature.
[FIG. 7] A partially enlarged view of an armature according to a modification.
[FIG. 8] An exploded perspective view of an armature according to a third embodiment of the present invention.
[FIG. 9] An assembly view of the armature.
[FIG. 10] A view describing an example of punching a first magnetic plate.
[FIG. 11] A plan view showing, as an example, part of a yoke employed in an armature according to a fourth embodiment of the present invention.
[FIG. 12] An enlarged perspective view showing part of a recessed portion.
[FIG. 13] A cross-sectional view showing enlarged part of an armature core buried in the recessed portion.
[FIG. 14] A view showing the armature core.
[FIG. 15] A perspective view of an armature core according to a modification.
[FIG. 16] A cross-sectional view showing a state in which an armature core is disposed in a yoke.
[FIG. 17] A plan view showing a rectangular solid portion according to a modification as an example.
[FIG. 18] An exploded perspective view showing a rotary electric machine according to the present invention as an example.
[FIG. 19] A cross-sectional view showing a compressor according to the present invention as an example.

### Best Modes for Carrying Out the Invention

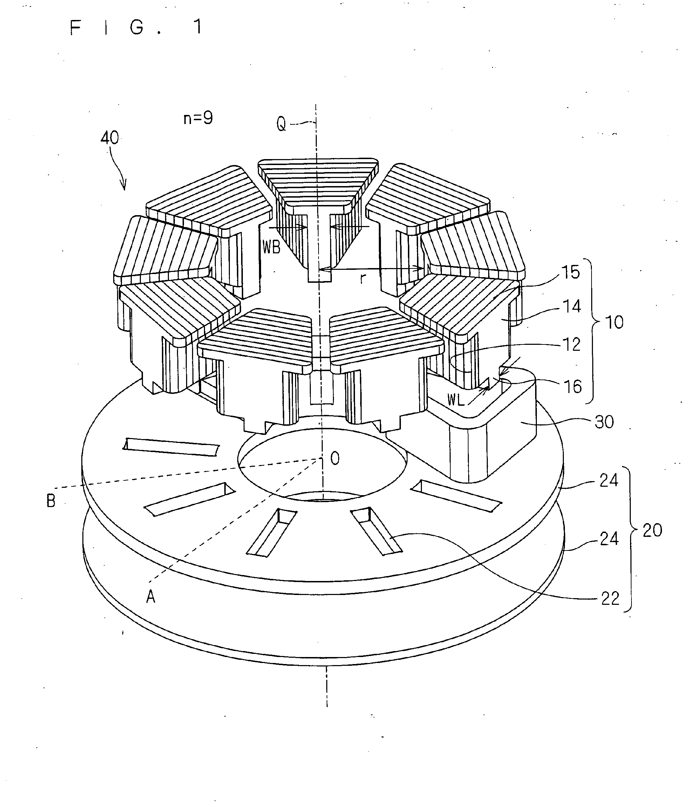

Hereinafter, preferred embodiments of the present invention are described with reference to the drawings. Note that in the drawings including FIG. 1, only elements related to the present invention are shown.

### First Embodiment

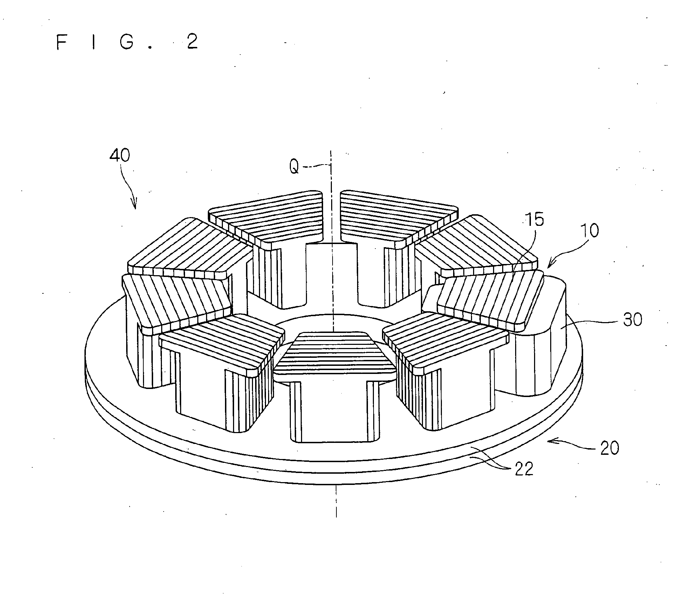

FIG. 1 is an exploded perspective view of an armature 40 according to a first embodiment of the present invention, which shows the armature 40 disassembled in a direction along a rotation axis Q. FIG. 2 is an assembly view of the armature 40. As shown in FIG. 1, the armature 40 includes armature cores 10, a yoke 20 and armature coils 30, which is applied to, for example, an axial gap motor (not shown). Note that unless particularly noted in the present application, the armature coil refers to a mode in which wires are wound as a whole, not to each wire constituting this. This holds true for the drawings as well. Leading lines in start and end of winding and wire connection thereof are also omitted in the drawings. FIG. 2 shows only one armature coil, and other armature coils are not shown for showing a form of the armature core.

The armature core 10 is formed by laminating a plurality of magnetic plates (corresponding to the "first magnetic plates" in Means to Solve the Problem) 12. In the magnetic plates 12, a width of a length WB in a first direction perpendicular to its laminate direction gradually increases from one side toward the other side in the lamination direction. Here, the one side corresponds to an inner circumferential side when a plurality of armature cores 10 are circularly arranged with the rotation axis Q being the center, while the other side corresponds to an outer circumferential side. In the vicinity of an end portion of the other side, there is provided a portion in which the width of the length WB in the first direction decreases from the one side toward the other side of the lamination direction.

The armature core 10 laminated in this manner includes a prism portion 14 whose height is the rotation axis (corresponding to the "second direction" in Means to Solve the Problem) Q perpendicular to the lamination direction as well as the first direction. Provided around the prism portion 14 is the armature coil 30 with the rotation axis Q being an axis of winding. Although the term "prism" is used here, a shape in which a corner is provided with a fillet or the like to be rounded is included. In actuality, though a laminated surface is composed of minute (for a thickness of one steel plate) steps because punched steel plates are laminated, this level of step is ignored, and the term "prism portion" is used.

That is, as shown, an edge of the prism portion 14 that is parallel to the rotation axis X may be chamfered. Accordingly, the length WB is not necessarily limited to a case where the length WB gradually increases its width from the inner circumference side toward the outer circumference side.

Further, the armature core 10 includes a first rectangular solid portion 16 that is adjacent to the prism portion 14 in the rotation axis Q direction and has a uniform length WL in the first direction. Moreover, the armature core 10 may include, on the side opposite to the first rectangular solid portion 16 with respect to the prism portion 14, a flanged member 15 extending beyond the prism portion 14 in an in-plane direction with the rotation axis Q being a normal. In other words, the armature core 10 includes the flanged member 15 on one side (upper side of the view) of the prism portion 14 having a height in the rotation axis Q direction and includes the first rectangular solid portion 16 on the other side (lower side of the view). Note that the flanged member 15 is not necessarily required to be formed so as to have a uniform width in the lamination direction of magnetic plates 12b, and a width thereof may change along a radial direction. In particular, a side of the prism portion in a circumferential direction is desired to be parallel to a side of a flanged member in the circumferential direction.

The length WL of the first rectangular solid portion 16 in the first direction is equal to or smaller than a length 2πr/n obtained by dividing 2πr by n, where 2πr represents a circumference of a circle whose radius is a length r from the rotation axis Q as the center to a position of the armature core 10 closest to the rotation axis Q, and n represents the number of armature cores 10 buried in recessed portions 22 of the yoke 20. Here, though FIG. 1 shows a case where the number n of armature cores 10 is nine as an example, an appropriate change may be made depending on, for example, the performance required for the rotary electric machine. Note that this condition is satisfied when the length (WL) of the first rectangular solid portion in the first direction is equal to or smaller than a minimum value of the length (WB) of the prism portion in the first direction.

The yoke 20 is formed by laminating a plurality of magnetic plates (corresponding to the "second magnetic plates" in Means to Solve the Problem) 24 in the rotation axis Q direction, which includes the recessed portions 22 in which the first rectangular solid portions 16 of the armature cores 10 can be buried. Note that though the recessed portion 22 may penetrate the yoke 20 (not shown), when the recessed portion 22 dose not penetrate the yoke 20 and is formed at a predetermined depth (see FIG. 1), the strength of the yoke 20 is increased and a depth for burying the armature core 10 is defined. Further, the yoke 20 is not necessarily required to be formed by laminating a plurality of magnetic plates 24, and may be integrally formed by powder compacting formation or the like. Even if a recessed portion penetrates a yoke, a burying depth in the yoke is defined by a gap between a prism portion and a first rectangular solid portion.

With respect to the above-mentioned yoke 20, a plurality of armature cores 10 are circularly arranged with the rotation axis Q being the center on the yoke 20, and edges of the prism portion 14 and the flanged member 15 adjacent to each other are formed or arranged so as to be parallel to each other. Note that appropriate selection is made between the following. By giving priority to a size of the yoke 20 (in turn, a size of a rotary electric machine or the like), a plurality of armature cores 10 arranged in the yoke 20 are formed such that the edges of the prism portion 14 and the flanged member 15 adjacent to each other are parallel to each other. Alternatively, by giving priority to an angle formed by two edges of one armature core 10, a plurality of armature cores 10 are formed and arranged such that the edges of the prism portion 14 and the flanged member 15 adjacent to each other are parallel to each other.

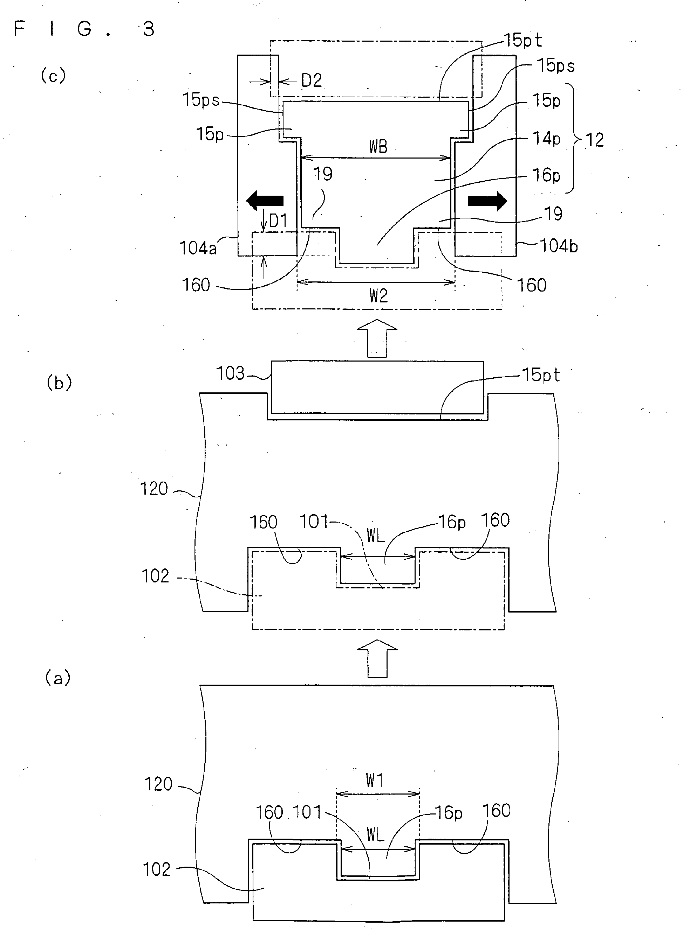

FIG. 3(a)(b)(c) is a view describing an example of punching the magnetic plates 12, which show boundaries between the magnetic plates 12 and molds 102, 103, 104a and 104b to be apart from each other. In the armature core 10, the first rectangular solid portion 16 is formed so as to have a uniform width, whereas the width of the prism portion 14 gradually increases in the lamination direction of the magnetic plates 12. From the viewpoint of forming the magnetic plates 12 through punching, it is desired that for the reason described below, the length WL of the first rectangular solid portion 16 in the first direction be formed to be equal to or smaller than the length WB of the prism portion 14 in the first direction.

First, as shown in FIG. 3(a), in a belt-like magnetic member 120 that is long in the left-right direction of the view, only a part 16p constituting the first rectangular solid portion 16 is punched with the mold 102 such as a punch and a die. The punched magnetic member 120 moves along, for example, an upper direction of the sheet (for example, an open arrow direction of the view), and in the magnetic member 120, a plurality of parts 16p arranged in an extending direction thereof are successively punched. The length WL of the first rectangular solid portion 16 is uniform as described above, and thus a width of the part 16p is uniform at the length WL as well, whereby a width W1 of a recessed portion 101 provided by the mold 102 does not need to be changed and can be fixed. The width W1 is larger than the length WL by twice the clearance for punching. Next, as shown in FIG. 3(b), an upper portion 15pt of a part constituting the flanged member 15 is punched. Note that punching of FIG. 3(a) and punching of FIG. 3(b) may be performed at the same time.

After that, a part 14p constituting the prism portion 14 and a lateral portion 15ps of the part 15p constituting the flanged member 15 are successively punched with the molds 104a and 104b while performing alignment of the molds 104a and 104b respectively with the part 16p in a moving direction of the magnetic member 120, as shown in FIG. 3(c). Note that a side 160 of the part 14p on the part 16p side has been formed with the mold 102.

As described above, the width of the length WB of the prism portion 14 gradually increases along the lamination direction, and thus the width of the part 14b is also required to be punched so as to differ. Specifically, punching is performed with the mold 104 while changing a width W2 of a portion between the molds 104a and 104b in which the part 14p is punched. The width W2 is larger than the length WB by twice the clearance for punching.

In this case, it is desired that a region punched with the mold 102 and the regions punched with the molds 104a and 104b overlap each other in the direction along the rotation axis Q by a predetermined width (for example, width D1). Specifically, it is desired that the molds 104a and 104b extend in the direction along the rotation axis Q from the part 14p rather than from the side 160. This is because, if that is not the case, it is difficult to reliably punch a boundary region between the part 14p and the part 16p.

In addition, it is desired that a region punched with the mold 103 and the regions punched with the molds 104a and 104b overlap each other by a predetermined width (for example, width D2) in the extending direction (direction perpendicular to the rotation axis Q) of the magnetic member 120. Specifically, it is desired that the mold 103 extend from the part 15p rather than from the lateral portion 15ps or the part 15p that constitutes the flanged member 15 in the extending direction of the magnetic member 120. This is because, if that is not the case, it is difficult to reliably punch corners of the part 15p.

Here, the length WL is equal to or smaller than a minimum value of the length WB, and thus the width W2 between the molds 104a and 104b is inevitably larger than the width W1 of the recessed portion 101 of the mold 102. Accordingly, it is possible to use the molds 104a and 104b extending from the part 14p rather than from the side 160 in the direction along the rotation axis Q. That is, when the molds 104a and 104b adjust only the width W2 in forming the magnetic plates 12, it is possible to successively punch the magnetic plates 12 from the magnetic member 120 without changing the molds 104a and 104b. Such adjustment of the width W2 is easily achieved by adjusting, for example, a relative positional relationship between the molds 104a and 104b in the left-right direction of the sheet (for example, black arrows of the view).

The armature coil 30 is capable of employing a separately prepared air-core coil that is wound around the prism portion 14 as long as the length WL of the first rectangular solid portion 16 in the first direction is formed to be equal to or smaller than the minimum value of the length WB of the prism portion 14 in the first direction. That is, when the prism portion 14 is inserted into an air core portion of the air-core coil from the first rectangular solid portion 16 side, the prism portion 14 functions as a core of the armature coil 30. When the prism portion 14 includes the flanged member 15, an air-core coil is attached from the first rectangular solid portion 16 side toward the prism portion 14, and the first rectangular solid portion 16 is buried in the recessed portion 22, whereby the armature coil 30 can be held by the flanged member 15 and the yoke 20.

### Effects of First Embodiment

As described above, the armature core 10 includes a plurality of laminated magnetic plates 12, which reduces an eddy current. In addition, the armature 40 for axial gap can be obtained by winding the armature coil 30 around the prism portion 14 and burying the first rectangular solid portion 16 in the recessed portion 22. When the side on which the width of the prism portion 14 is larger is provided on the outer circumference side in providing a plurality of armature cores 10 in the yoke 20, the armature cores 10 occupy the space with efficiency. Moreover, when the first rectangular solid portion 16 is employed as the portion buried in the recessed portion 22, the clearance between the recessed portion 22 of the yoke 20 and the first rectangular solid portion 16 is reduced irrespective of the shape of the prism portion 14, whereby it is possible to reduce a magnetic resistance between the armature core 10 and the yoke 20. In particular, press-fitting or shrink fitting can be employed in burying the first rectangular solid portion 16 in the recessed portion 22.

Further, the length WL of the first rectangular solid portion 16 in the first direction is equal to or smaller than the minimum value of the length WB of the prism portion 14 in the first direction, and thus a separately prepared air-core coil is easily attached to the prim portion 14 from the first rectangular solid portion 16 side. In addition, the magnetic plates 12 are easily punched.

Further, in the armature 40, a plurality of armature cores 10 are circularly arranged with the rotation axis Q being the center on the yoke 20, and the edges of the adjacent prism portions 14 (and flanged members 15) are formed or arranged so as to be parallel to each other. Accordingly, a gap between the armature core 10 and the yoke 20 is reduced while improving a space factor of the armature coil 30, which achieves an increase in fastening strength therebetween as well as a reduction in magnetic resistance therebetween.

Further, a separately prepared air-core coil is attached to the prism portion 14, and thus the armature coil 30 is capable of employing the air-core coil having a large space factor by, for example, performing normal winding and performing winding forming.

Further, the yoke 20 is formed by laminating a plurality of magnetic plates 24 in the rotation axis Q direction, which enables the formation of the yoke 20 with electromagnetic steel sheets whose iron loss is small.

Further, the length WL of the first rectangular solid portion 16 in the first direction is equal to or smaller than the length 2πr/n obtained by dividing 2πr by n, where 2πr represents a circumference of a circle whose radius is the length r from the rotation axis Q as the center to the position of the armature core 10 closest to the rotation axis Q, and n represents the number of armature cores 10 buried in the recessed portions 22 of the yoke 20. Accordingly, it is possible to bury the armature cores 10 in the yoke 20 without the respective first rectangular solid portions 16 of the adjacent armature cores 10 interfering with each other.

### Second Embodiment

In the first embodiment above, though the description is given of the mode in which only the first rectangular solid portions 16 are buried in the recessed portions 22 provided in the yoke 20, the present invention is not limited thereto. Description is given here of a mode in which a flanged portion 18a is further provided to the end portion of the first rectangular solid portion 16 as a second embodiment of the present invention, with reference to the drawings. Note that unless particularly noted in the following description of the embodiment, the elements having similar functions as those of the first embodiment above are denoted by the same reference symbols and the description thereof is omitted.

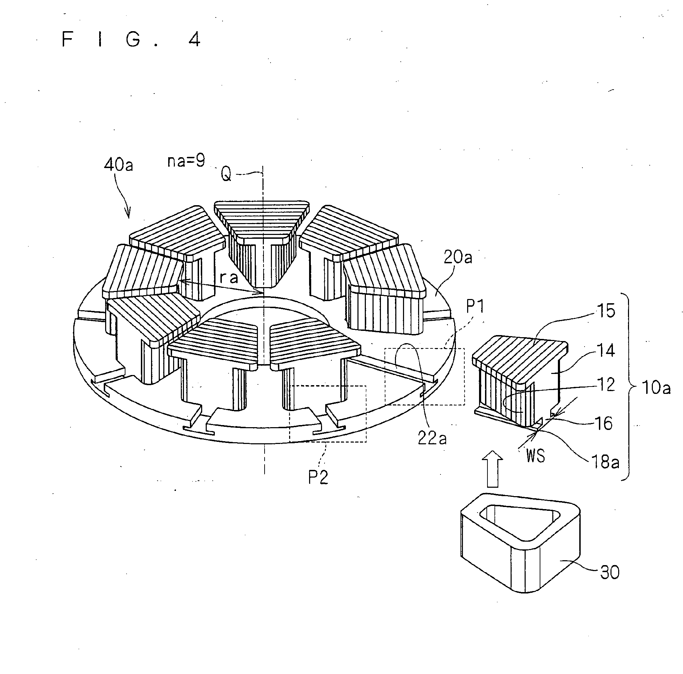

FIG. 4 is an exploded perspective view of an armature 40a according to the second embodiment of the present invention, in which one armature core 10a among a plurality of armature cores 10a disposed in a yoke 20a is separated from the yoke 20a, and is shown side by side with an armature coil 30a.

The armature 40a includes the armature cores 10a, the yoke 20a and the armature coils 30, which is applied to, for example, an axial gap motor (not shown).

Similarly to the armature core 10 described in the first embodiment above, the armature core 10a is formed by laminating a plurality of magnetic plates 12a and includes the prism portion 14, the flanged member 15 and the first rectangular solid portion 16. Further, the armature core 10a includes the flanged portion 18a at the end portion on the side opposite to the prism portion 14 with respect to the first rectangular solid portion 16, where a length WSa of the flanged portion 18a in the first direction is formed to be larger than the length WL of the first rectangular solid portion 16 in the first direction, and a length in the lamination direction thereof is set to be the same as that of the first rectangular solid portion 16. That is, the flanged portion is also a rectangular solid. Note that in order to avoid interference between the adjacent flanged portions 18a, the length WSa of the flanged portion 18a in the first direction is formed to be equal to or smaller than a length 2πra/na obtained by dividing 2πra by na, where 2πra represents a circumference of a circle whose radius is a length ra from the rotation axis Q as the closest center to a position of the armature core 10a, and na represents the number of armature cores 10 buried in recessed portions 22a of the yoke 20a (FIG. 4 shows a mode where na=9 as an example).

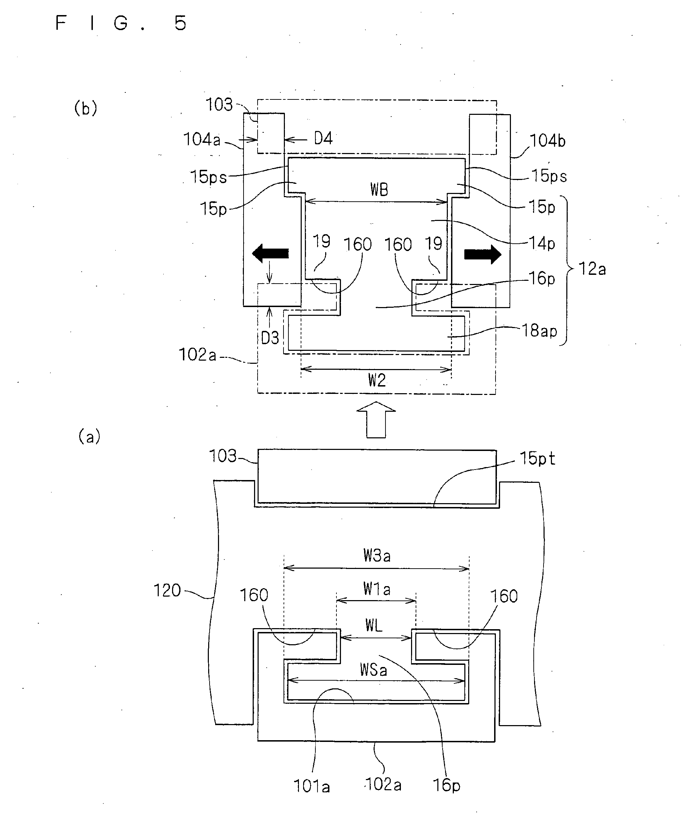

FIG. 5(a)(b) is a view describing an example of punching the magnetic plates 12a, which show boundaries between the magnetic plates 12a and molds 102a, 103, 104a and 104b to be apart from each other. In the present embodiment, similarly to the first rectangular solid portion 16, the flanged portion 18a is formed to have a uniform width in the lamination direction of the magnetic plates 12a. From the viewpoint of forming the magnetic plates 12a through punching as in the first embodiment above, it is desired that the length WL of the first rectangular solid portion 16 in the first direction be formed to be equal to or smaller than a minimum value of the length WB of the prism portion 14 in the first direction as described above and also be formed to be equal to or smaller than the length WSa of the flanged portion 18a in the first direction.

First, as shown in FIG. 5(a), in the belt-like magnetic member 120 that is long in the left-right direction of the view, the part 16p constituting the first rectangular solid portion 16, a part 18ap constituting the flanged portion 18a, and the upper portion 15pt of the part constituting the flanged member 15 are punched with the molds 102a and 103 such as a punch and a die. The punched magnetic member 120 moves along, for example, an upper direction of the sheet (for example, an open arrow direction of the view), and in the magnetic member 120, a plurality of parts 16p arranged in an extending direction thereof are successively punched. The length WL of the first rectangular solid portion 16 and the length WSa of the flanged portion 18a are uniform as described above, and thus a width of the part 16p and a width of the part 18ap are uniform to be WL and WSa, respectively. Therefore, widths W1a and W3a of the recessed portion 101a provided by the mold 102a do not need to be changed and can be fixed. The width W1a is larger than the length WL by twice the clearance for punching, whereas the width W3a is larger than the length WSa by twice the clearance for punching.

After that, as shown in FIG. 3(b), the part 14p constituting the prism portion 14 and the lateral portion 15ps of the part 15p constituting the flanged member 15 are successively punched with the molds 104a and 104b while performing alignment of the molds 104a 104b individually with respect to the parts 16p and 18ap in the moving direction of the magnetic member 120. In this case, as in the first embodiment above, the side 160 of the part 14p on the part 16p side has been formed with the mold 102a.

In this case, it is desired that the region punched with the mold 102a and the region punched with the mold 104a overlap each other by a predetermined width D3 in the direction along the rotation axis Q. Specifically, it is desired that the molds 104a and 104b extend from the part 14p rather than from the side 160 in the direction along the rotation axis Q. This is because, if that is not the case, it is difficult to reliably punch the boundary region 19 between the part 14p and the part 16p.

Further, it is desired that the region punched with the mold 103 and the regions punched with the molds 104a and 104b overlap each other by a predetermined width D4 in the extending direction (direction perpendicular to the rotation axis Q) of the magnetic member 120. Specifically, it is desired that the mold 103 extend from the part 15p rather than from the lateral portion 15ps of the part 15p constituting the flanged member 15 in the extending direction of the magnetic member 120. This is because, if that is not the case, it is difficult to reliably punch the corners of the part 15p.

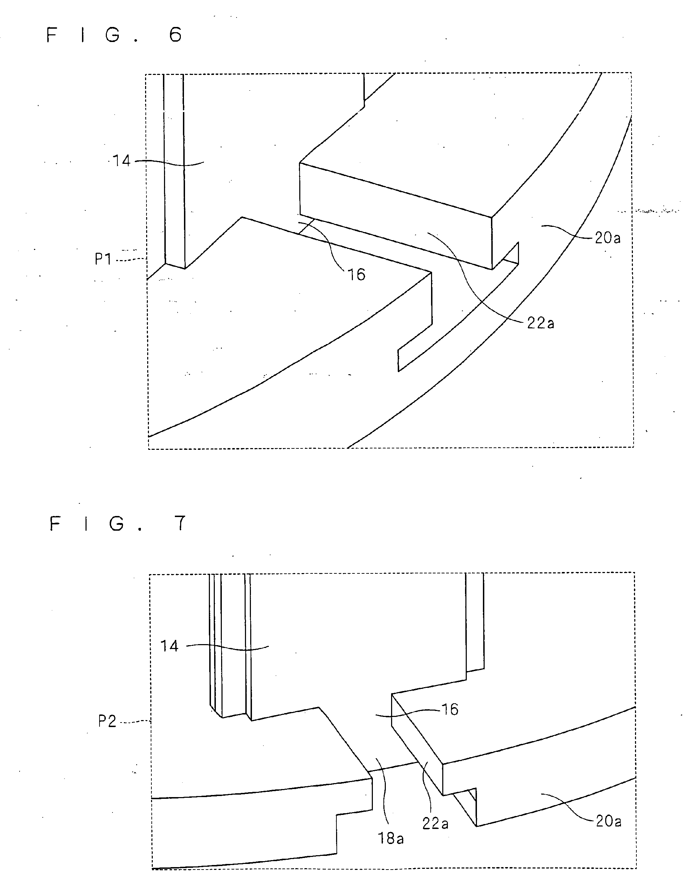

FIG. 6 is a partially enlarged view of the armature 40a, which shows a region corresponding to a region P1 of the armature 40a shown in FIG. 4. For example, one obtained by pressure-forming iron powders is applied to the yoke 20a, and the yoke 20a includes the recessed portions 22a in which the first rectangular solid portions 16 and the flanged portions 18a are buried. In the yoke 20a, the recessed portion 22a is also open toward an outer side in the radial direction with the rotation axis Q being the center and is not open toward an inner side. That is, part of the cross-sectional shape of the recessed portion 22a in the radial direction shows substantially the same shape as the mold 102a shown in FIG. 5, into which the first rectangular solid portion 16 and the flanged portion 18a of the armature core 10a can be inserted along the recessed portion 22a from the outer side in the radial direction.

### Modification of Second Embodiment

FIG. 7 is a partially enlarged view of the armature 40a according to a modification, which shows a region corresponding to a region P2 of the armature 40a shown in FIG. 4. As shown in FIG. 6, it is desired that the yoke 20a hold the end surface of the flanged portion 18a on the side opposite to the first rectangular solid portion 16 to hold the armature core 10a from the viewpoint of securing the strength of the armature 40a. However, in a case where the recessed portion 22a of the yoke 20a can hold the portion in the vicinity of the boundary between the prism portion 14 and the first rectangular solid portion 16 with a sufficient strength, as shown in FIG. 7, the end surface of the flanged portion 18a on the side opposite to the first rectangular solid portion 16 may be exposed.

### (Effects of Second Embodiment)

As described above, the armature core 10a further includes the flanged portion 18a at the end portion of the first rectangular solid portion 16 on the side opposite to the prism portion 14, and the length WSa of the flanged portion 18a in the first direction is smaller than the length WL of the first rectangular solid portion 16 in the first direction. Accordingly, even when the armature core 10a is attracted from the prism portion 14 side, it is possible to prevent or suppress the armature core 10a from becoming detached from the yoke 20a.

Further, when the yoke 20a is formed by powder compacting, the natural frequency is higher compared with the case where the yoke 20a is formed of electromagnetic steel plates, which increases vibration resistance. In particular, the flow of the magnetic flux toward the side (bottom of the yoke) opposite to the side of the yoke 20a on which the armature cores 10a are buried becomes smooth.

Further, the yoke 20a includes the recessed portions 22a in which the first rectangular solid portions 16 are buried, and in the yoke 20a, the recessed portion 22a is also open toward the outer side in the radial direction with the rotation axis Q being the center. Accordingly, the entire first rectangular solid portion 16 can be inserted from the outer side in the radial direction, which makes it easy to bury the armature core 10a in the recessed portion 22a.

### Third Embodiment

Although the descriptions in the first and second embodiments above are given of the mode in which the width of the first rectangular solid portion 16 is equal to or smaller than the minimum value of the width of the prism portion 14, and in particular, the description in the second embodiment is given of the mode in which the flanged portion 18a is provided to the lower side of the first rectangular solid portion 16, the present invention is not limited thereto. The width of the first rectangular solid portion 16 may be larger than the minimum value of the width of the prism portion 14. Description is given here, as a third embodiment of the present invention, of a mode in which a width of a first rectangular solid portion 16c is equal to or larger than the maximum value of the width of the prism portion 14, with reference to the drawings.

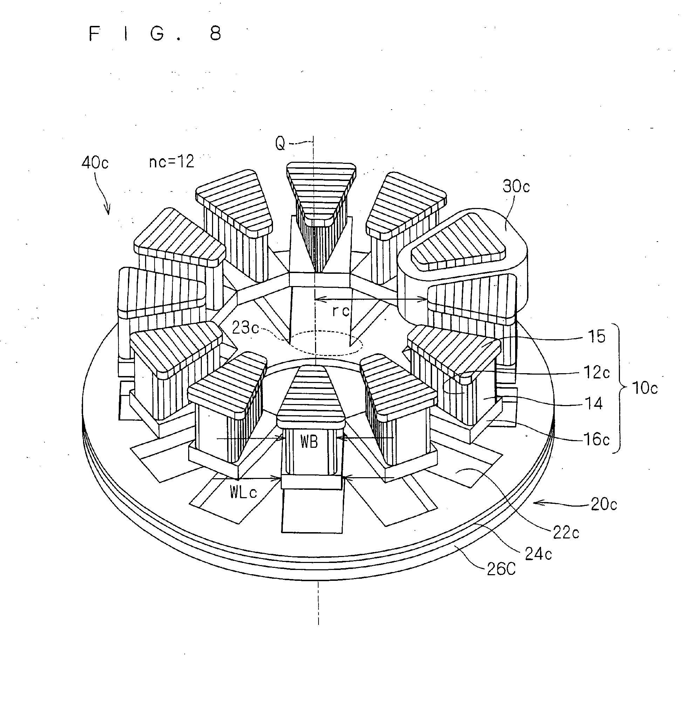

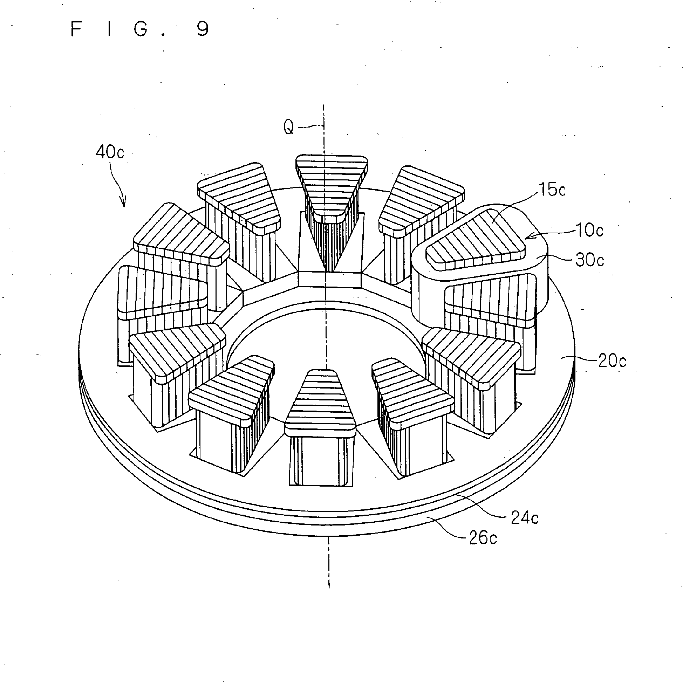

FIG. 8 is an exploded perspective view of an armature 40c according to the third embodiment of the present invention, which shows the armature 40c disassembled in the direction along the rotation axis Q. FIG. 9 is an assembly view of the armature 40c.

The armature 40c includes armature cores 10c and a yoke 20c, and is applied to, for example, an axial gap motor (not shown).

The armature core 10c is formed by laminating a plurality of magnetic plates 12 similarly to the armature core 10 described in the first embodiment above and includes the prism portion 14, the flanged member 15 and the first rectangular solid portion 16c, where the length WL of the first rectangular solid portion 16c in the first direction is formed to be larger than a maximum value of the length WB of the prism portion 14 in the first direction. Specifically, a length WLc of the first rectangular solid portion 16c in the first direction is substantially equal to a length 2πrc/nc obtained by dividing 2πrc by nc, where 2πrc represents a circumference of a circle whose radius is a length rc from the rotation axis Q being the center to a position of the armature core 10c closest to the rotation axis Q, and nc represents the number of armature cores 10c buried in the recessed portions 22c of the yoke 20c (FIG. 8 shows a mode in which nc=12 as an example). In addition, an armature coil 30c is series-wound around the prism portion 14 of the armature core 10c.

The yoke 20c is formed by laminating a plurality of magnetic plates 24c in the rotation axis Q direction and includes recessed portions 22c in which the first rectangular solid portions 16c are buried, where the recessed portion 22c is open also toward a part 23c on an inner side of the yoke 20c in the radial direction with the rotation axis Q being the center. Further, the yoke 20c is short-circuited on the outer side than the armature cores 10c in the radial direction and on the side (lower side of the view) opposite to the side on which the armature cores 10c are buried in the yoke 20c. That is, the recessed portions 22c in which the first rectangular solid portions 16c of the armature cores 10c can be buried are formed on a main surface on one side of the surface on which the yoke 20c extends, whereas the recessed portions 22c are not formed on a main surface on the other side. Further, the yoke 20c is short-circuited on the outer side than the armature cores 10c in the radial direction, and thus the armature cores 10c can be held by securing an inner circumference thereof by any means.

Further, in the present embodiment, the first rectangular solid portion 16c has a larger area in the surface on which the yoke 20c extends than the prism portion 14, and thus as described in the second embodiment and its modification above, the armature core 10c cannot be held in the vicinity of the boundary between the prism portion 14 and the first rectangular solid portion 16c (side 160 of FIG. 5). Therefore, the yoke 20c is capable of holding the armature cores 10c when the side opposite to the side on which the armature cores 10c are buried is short-circuited.

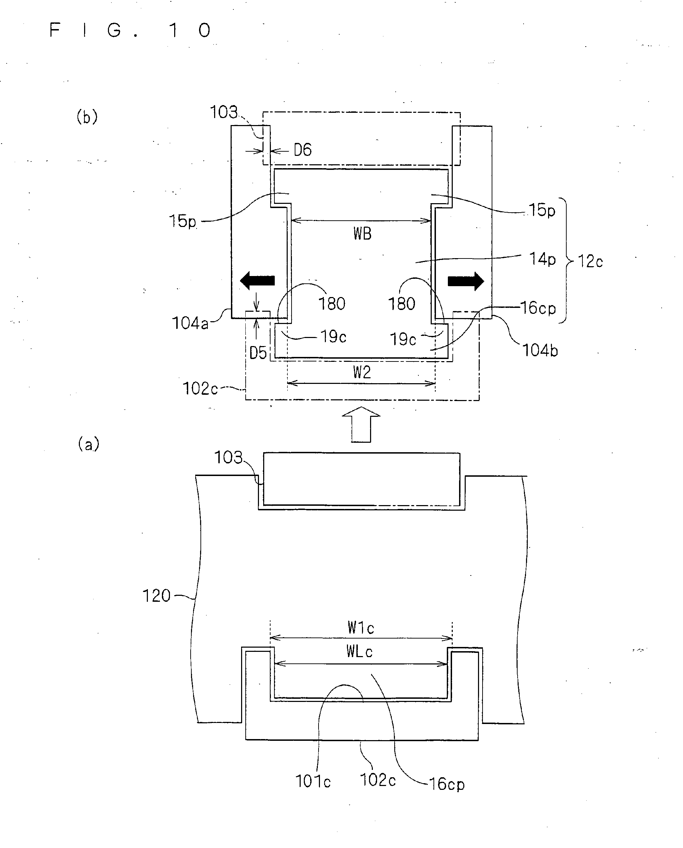

FIG. 10(a)(b) is a view describing an example of punching the magnetic plates 12c, which show boundaries between the magnetic plates 12c and molds 102b, 103, 104a and 104b to be separated from each other. In the armature core 10c, the first rectangular solid portion 16 is formed to have a uniform width in the lamination direction of the magnetic plates 12c, where the length WLc of the width is formed so as to be equal to or larger than the maximum value of the length WB of the prism portion 14 in the first direction.

First, as shown in FIG. 10(a), in the belt-like magnetic member 120 extending in a vertical direction with the left-right direction of the view being the width direction, part of a part 16cp constituting the first rectangular solid portion 16c and the upper portion 15pt of the part 15p constituting the flanged member 15 are punched with the molds 102c and 103. Specifically, a side 180 of the part 16cp on the prism portion 14 side has yet to be formed. The punched magnetic member 120 moves along, for example, an upper direction of the sheet (for example, open arrow direction of the view), and in the magnetic member 120, a plurality of parts 16cp arranged in the extending direction thereof are punched successively. The length WLc of the first rectangular solid portion 16c is uniform as described above, and thus the width of the part 16cp is also uniform to be the length WLc. Accordingly, a width W1c of a recessed portion 101c provided by the mold 102c does not need to be changed and can be fixed. The width W1c is larger than the length WLc by twice the clearance for punching.

After that, the part 14p constituting the prism portion 14 and the lateral portion 15ps of the part 15p constituting the flanged member 15 are successively punched with the molds 104a and 104b while performing alignment of the molds 104a and 104b individually with respect to the part 16cp and the upper portion 15pt in the moving direction of the magnetic member 120. Part of the part 16cp is punched as well when the part 14p is punched, to thereby punch the side 180 that has not been punched in the preceding step.

In this case, it is desired that the region punched with the mold 102c and the regions punched with the molds 104a and 104b overlap each other by a predetermined width D5 in the direction along the rotation axis Q. Specifically, it is desired that the mold 102c extend from the part 16cp rather than from the side 180 in the direction along the rotation axis Q. This is because, if that is not the case, it is difficult to reliably punch a boundary region 19c between the part 16cp and the part 14p.

Further, it is desired that the region punched with the mold 103 and the regions punched with the molds 104a and 104b overlap each other by a predetermined width D6 in the extending direction (direction perpendicular to the rotation axis Q) of the magnetic member 120. Specifically, it is desired that the mold 103 extend from the part 15p rather than from the lateral portion 15ps of the part 15p constituting the flanged member 15 in the extending direction of the magnetic member 120. This is because, if that is not the case, it is difficult to reliably punch corners of the part 15p.

Next, a thickness of the entire yoke 20c in the rotation axis Q direction and a depth of the recessed portion 22c are discussed. In order that the yoke 20c holds the armature cores 10c in the rotation axis Q direction, the yoke 20c in which the armature cores 10c are disposed may bend if a difference between the thickness of the entire yoke 20c and the depth of the recessed portion 22c is substantially equal to, for example, the thickness of the magnetic plate 24c, which indicates an insufficient difference between the thickness of the entire yoke 20c and the depth of the recessed portion 22c. Accordingly, on the side opposite to the side on which the armature cores 10c are buried, the yoke 20c may further include a bottom 26c formed of non-magnetic metal (for example, such as aluminum and brass) that has a larger thickness in the rotation axis Q direction compared with the magnetic member 24c. Accordingly, the rigidity of the yoke 20c is increased, which makes it possible to reliably hold the armature cores 10c.

### Effects of Third Embodiment

As described above, the length WLc of the first rectangular solid portion 16c in the first direction is larger than the maximum value of the length WB of the prism portion 14 in the first direction, whereby the magnetic resistance between the armature core 10c and the yoke 20c is small. In addition, the magnetic plate 12 is punched with ease.

Further, the armature coil 30c is series-wound around the prism portion 14, and thus the armature coil 30c is firmly bonded to the armature core 10c, which avoids or suppresses winding collapse.

Further, the recessed portion 22c is open also toward the inner side of the yoke 20c in the radial direction, and thus the first rectangular solid portion 16c can be inserted from the inner side in the radial direction, which makes is easy to bury the armature core 10c in the recessed portion 22c. In addition, compared with the mode in which the recessed portion is open toward the outer side in the radial direction, which is described in the second embodiment above, this is advantageous in that the armature core 10c is hard to become detached from the recessed portion 22c by securing the inner circumference by any means.

Further, the length WLc of the first rectangular solid portion 16c in the first direction is substantially equal to the length 2πrc/nc obtained by dividing 2πrc by nc, where 2πrc represents the circumference of a circle whose radius is the length rc from the rotation axis Q as the center to a position of the armature core 10 closest to the rotation axis Q, and nc represents the number of armature cores 10c buried in the recessed portions 22c of the yoke 20c. Accordingly, one first rectangular solid portion 16c does not absorb shocks with the other first rectangular solid portion 16c, and a large amount of magnetic flux linkage is obtained by effectively using the space capable of being occupied.

Further, the yoke 20 is short-circuited on the outer side than the armature cores 10c in the radial direction and the side opposite to the side on which the armature cores 10c are buried in the yoke 20c, whereby the short-circuited part on the outer side of the yoke 20c in the radial direction can suppress the armature cores 10c from becoming detached or moving even when the centrifugal force is exerted on the armature cores 10c due to rotation.

Further, the yoke 20c can reliably hold the armature cores 10c as long as the bottom 26c is provided on the.side opposite to the side on which the armature cores 10c are buried.

Here, when both of the bottom 26c and the magnetic plate 24c are formed of thin plates laminated in the rotation axis Q direction, and when the thickness of the thin plates constituting the bottom 26c in the rotation axis Q direction is larger than the thickness of the thin plates constituting one magnetic plate 24c in the rotation axis Q direction, the rigidity of the yoke 20c is increased, and the armature cores 10c can be held more reliably. In addition, it is possible to increase the strength of the bottom 26c that is preferably used for securing the strength while reducing iron loss in the magnetic plate 24c that is preferably used for a magnetic path.

Further, when the bottom 26c is formed of non-magnetic metal, an eddy current can be reduced even if the thickness in the rotation axis Q direction is large.

### Fourth Embodiment

The description is mainly given of the armature cores 10, 10a and 10c in the first to third embodiments above, where a magnetic resistance of the armature employing the above-mentioned armature cores 10, 10a or 10c can be reduced as follows. Description is given here, as a fourth embodiment of the present invention, of a mode in which an elastic member is provided between an armature core and a yoke with reference to the drawings.

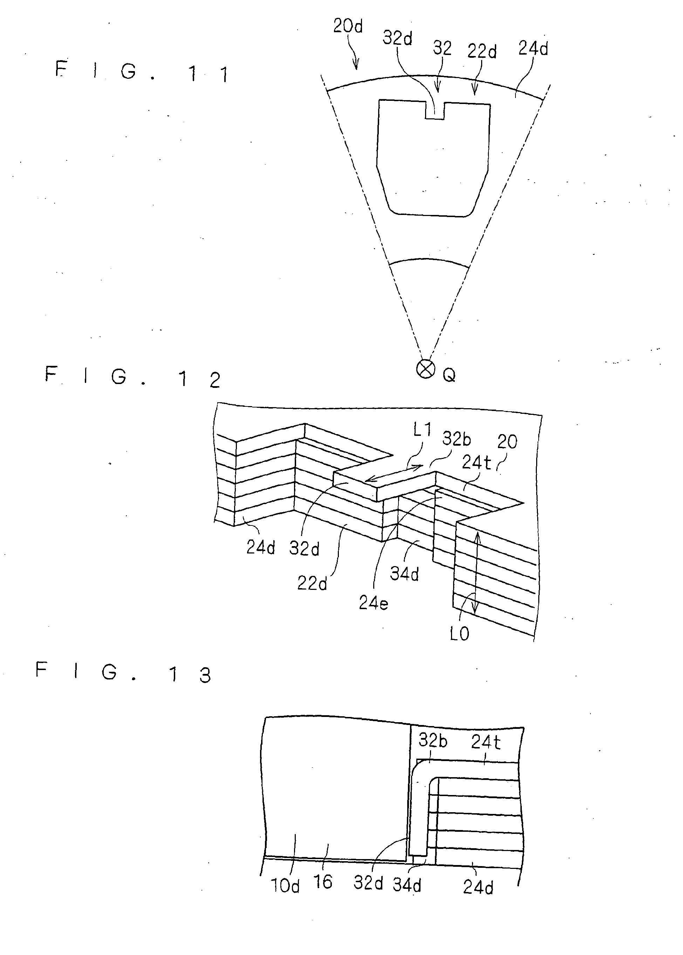

FIG. 11 is a plan view showing, as an example, part of a yoke 20d employed in the armature according to the fourth embodiment of the present invention, which shows a part corresponding to a part indicated by A-O-B of FIG. 1 in bird's eye view from the rotation axis Q direction. In addition, FIG. 12 is an enlarged perspective view showing part of a recessed portion 22d.

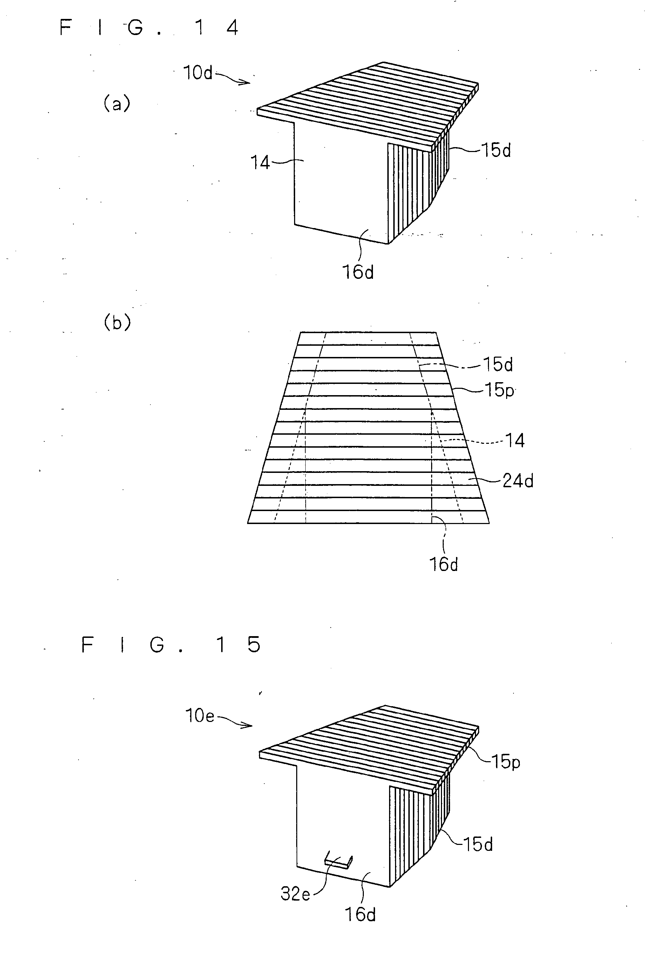

The yoke 20d is formed by laminating a plurality of circular second magnetic plates 24d with the rotation axis Q being the center in the lamination direction and has a main surface with the rotation axis Q direction being a normal, and each second magnetic plate 24d appropriately includes a hole 23d. A plurality of second magnetic plates 24d including the hole 23d are laminated in the rotation axis Q direction, whereby the yoke 20d has a plurality of recessed portions 22d in which a plurality of armature cores 10d (described below with reference to FIG. 14) are circularly disposed around the rotation axis Q.

A second magnetic plate 24t among the second magnetic plates 24d constituting the yoke 20d that is positioned on the side closest to the armature core 10d includes a projection 32d projecting from an edge on the outer side of the recessed portion 22d in the radial direction toward the inner side in the radial direction. It is desired that a length L1 of the projection 32d projecting from the edge of the recessed portion 22d be smaller than a depth L0 of the recessed portion 22d. Taking a concrete example, in a case where the recessed portion 22d is defined by, for example, four second magnetic plates 24d and the second magnetic plate 24t including the projection 32d, by five second magnetic plates 24d and 24t in total, the length L1 of the projection 32d is smaller than the depth L0 in a case of laminating five second magnetic members 24d and 24t in total. Moreover, it is desired that the length L1 of the projection 32d be smaller than a depth L2 of the recessed portion 22d excluding the second magnetic plate 24t. When the above-mentioned conditions of depth are satisfied, the second magnetic plate 24t in which the projection 32d is provided is not required to be one positioned on the side closest to the armature core 10d.

Further, among the second magnetic plates 24d and 24t that define the recessed portion 22d, the second magnetic plates 24d excluding the second magnetic plate 24t including the projection 32d have notches 34d in which the projections 32 are accommodated at positions corresponding to the projections 32d. Note an edge 24e on the outer side in the radial direction of the second magnetic plate 24d that defines the notches 34d is desired to project toward an inner side in the radial direction than a base 32b of the projection 32d. In other words, it is desired that the base 32b of the projection 32d be positioned on the outer side in the radial direction than the edges on the outer side in the radial direction of the second magnetic plates 24d excluding the second magnetic plate 24t. The reason for this is that stress concentration in the base 32b when the projection 32d bends sharply is avoided or suppressed, and the sharply bent projection 32d is accommodated in the notch 34d, thereby suppressing the stress concentration.

FIG. 13 is an enlarged cross-sectional view of part of the armature core 10d buried in the recessed portion 22d. The second magnetic plate 24t including the projection 32d has elasticity. The projection 32d is bent sharply when the armature core 10 is inserted into the recessed portion 22d, which functions as an elastic member 32 that urges the armature core 10d toward the rotation axis Q. In a case where the second magnetic plates 24d constituting the yoke 20d are punched to be molded, the elastic member 32 is manufactured with ease by changing shapes of the holes 23. That is, punching may be performed by replacing the mold for punching the projection 32d and the mold for punching the notch 34d with each other.

In a case where the armature core 10 is buried in the recessed portion 22d by making the length L1 of the projection 32d smaller than the depth L0 of the recessed portion 22d, it is possible to prevent the projection 32d from being sandwiched between the main surface of the yoke 20d and the bottom surface of the armature core 10d.

Further, the notch 34d accommodating the sharply bent projection 32d is provided, whereby it is possible to reduce a gap between the armature core 10d and the recessed portion 22d by a thickness of the projection 32d, that is, by a thickness of the second magnetic plate 24t.

In particular, the first magnetic plates 12 laminated in the radial direction constitute the armature core 10d, and hence a tolerance in the lamination direction is a total sum of plate thickness tolerances of one first magnetic plate 12. For this reason, the tolerance is large in the length in the radial direction than the length in the direction perpendicular to the radial direction. However, control of the shape of the recessed portion 22d in consideration of the tolerance complicates the steps or incurs a cost increase. Accordingly, rattling inevitably occurs in the radial direction. The projection 32d absorbs this rattling, and prevents or suppresses the armature core 10 from becoming detached in the recessed portion 22d.

FIG. 14 are views showing the armature core 10d, where FIG. 14(a) is a perspective view of the armature core 10d and FIG. 14(b) is a plan view which is viewed from the rotation axis Q direction in bird's eye view. In a case of aiming to reduce a magnetic resistance or suppressing rattling, it is desired that the armature core 10d shown in FIG. 14 be employed in place of the armature core 10 shown in FIG. 1.

That is, as shown in FIG. 14(b), there is provided, on the inner side of a first rectangular solid portion 16d in the radial direction, a column portion 15d whose length WL in the first direction decreases along the radial direction when the armature core 10d is buried in the yoke 20d. The edge in the circumferential direction, which is defined by successively decreasing the lengths WL of the second magnetic plates 24d in the first direction, has an isosceles trapezoid shape with the radial direction being the center, and a longer side of two parallel sides of the isosceles trapezoid coincides with the length WL of the first rectangular solid portion 16d in the first direction. In addition, a shorter side of the two sides is perpendicular to the radial direction on the inner side in the radial direction.

By forming the edge in the circumferential direction and the edge of the recessed portion 22d corresponding thereto so as to be parallel to each other, the air gap between the armature core 10d and the yoke 20d can be reduced in a case where the projection 32d is urged from the outer side in the radial direction toward the inner side in the radial direction.

### Modification of Fourth Embodiment

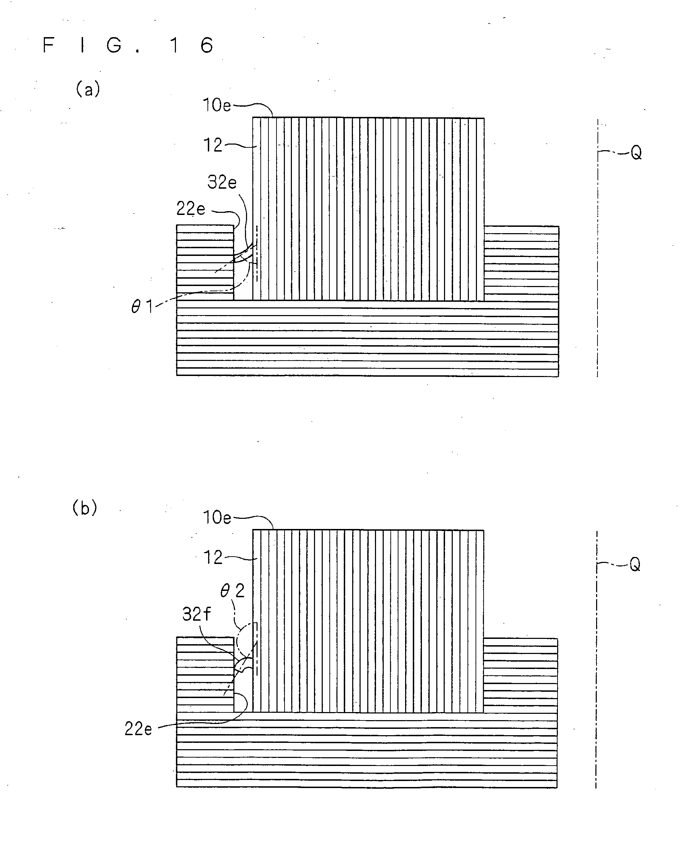

FIG. 15 is a perspective view showing a modification of the armature core 10d. FIG. 16 is a cross-sectional view showing a state in which the armature core 10d or 10e are buried in a recessed portion 22e, which show a surface defined by the rotation axis Q direction and the radial direction. The elastic member 32 is not necessarily required to be provided in the yoke 20d, and may be provided on the armature core 10d side. Taking a concrete example, as shown in FIG. 16(a), part of the first rectangular solid portion 16d of a first magnetic plate 12u constituting the outermost side in the radial direction in the armature core 10d is cut in a U-shape, and a region surrounded by the U-shape is lifted from a surface on which the first magnetic plate 12d extends by an angle θ1 (0°<θ1<90°), thereby forming a projection 32e. Note that as shown in FIG. 16(b), the region surrounded by the U-shape may be lifted by an angle θ2 (90°<θ2<180°), thereby forming a projection 32f.

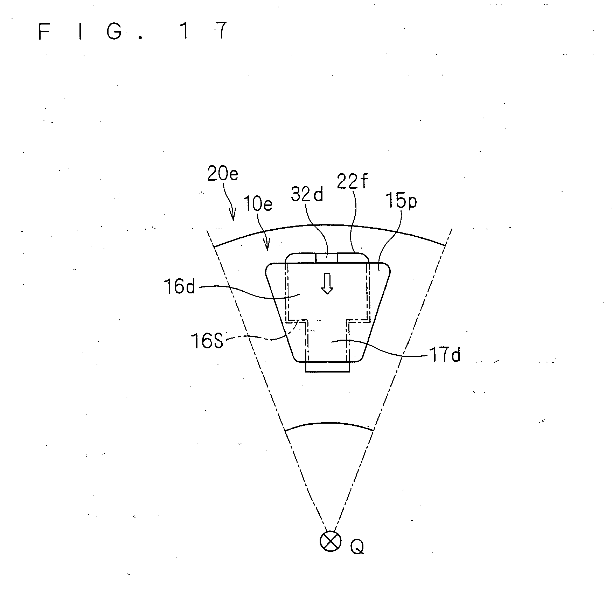

FIG. 17 is a plan view showing part of an armature 40e according to a further modification of the fourth embodiment as an example. The mode in which the first rectangular solid portion 16d and a second rectangular solid portion 17d having a small length WL in the first direction on the rotation axis Q side than the first rectangular solid portion 16d are provided may suffice, not limited to the mode in which the first rectangular solid portion 16d and the column portion 15d are provided as shown in FIG. 11 and FIG. 14. Specifically, the first rectangular solid portion 16d extending in the circumferential direction in plan view from the rotation axis Q direction and the second rectangular solid portion 17d extending in the radial direction show a substantially T-shape, and the second rectangular solid portion 17d extends from substantially the center of the first rectangular solid portion 16d toward the inner side in the radial direction.

A recessed portion 22f also has a shape corresponding to the first rectangular solid portion 16d and the second rectangular solid portion 17d. That is, the recessed portion 22f shows substantially a T-shape by the part extending in the column direction (hereinafter, "circumferential direction part") and the part extending in the radial direction (hereinafter, "radial direction part"), and the radial direction part extends from substantially the center of the circumferential direction part toward the inner side in the radial direction. Further, the length of the radial direction part in the radial direction is made to be larger than the length of the second rectangular solid portion 17d in the radial direction.

With the configuration as described above, in the case where the armature core 10f is buried in the recessed portion 22e, the armature core 10f is urged toward the rotation axis Q by an elastic force of the projection 32d, whereby a surface 16S on the inner side of the first rectangular solid portion 16d in the radial direction is brought into intimate contact with the recessed portion 22e. Accordingly, the magnetic flux flowing through the armature core 10e flows via the first rectangular solid portion 16d and the second solid rectangular portion 17d in the circumferential direction without being impaired by an air gap.

### Application to rotary electric machine

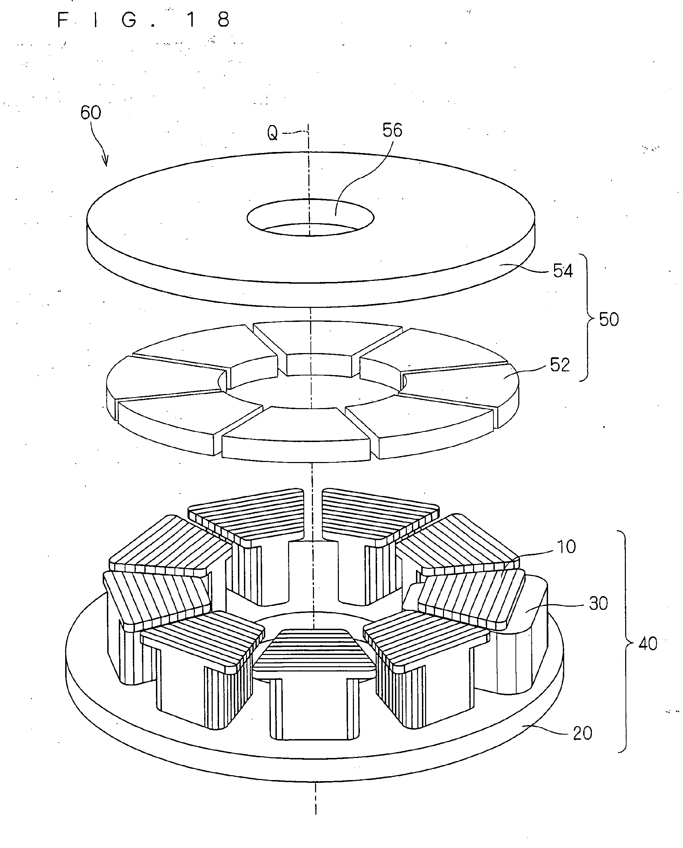

FIG. 18 is an exploded perspective view showing a rotary electric machine 60 according to the present invention as an example, which shows the rotary electric machine 60 disassembled in the direction along the rotation axis Q. The rotary electric machine 60 includes the armature (stator) 40 and a field element (rotor) 50, and the armature cores 10 provided in the armature 40 and the field element 50 are opposed to each other in the rotation axis Q direction through a predetermined air gap. Note that though FIG. 18 shows, as an example, the rotary electric machine 60 including the armature 40 described in the first embodiment above, the rotary electric machine may include the armature 40a or 40c described in the second or third embodiment above.

The field element 50 includes magnets 52 that generate a magnetic field flux and a yoke 54 that holds the magnets 52. Although FIG. 18 shows a mode in which eight magnets 52 are provided as an example, appropriate modification may be made depending on, for example, the ability required for the rotary electric machine 60.

The magnets 52 are circularly disposed around the rotation axis Q, and the yoke 54 is provided with a hole 56 for causing a rotation shaft (not shown) to penetrate therethrough around the rotation axis Q. Note that in actuality, the magnets 52 and the yoke 54 are provided in a close contact manner.

### Effects in a case of application to rotary electric machine

As described above, the rotary electric machine 60 is formed by arranging the field element 50 so as to be opposed to the armature 40 described in the first or third embodiment above along the rotation axis Q direction, whereby an output of the rotary electric machine 60 is increased.

Further, the field element 50 includes the magnets 52 that generate a magnetic field flux, and thus the magnetic flux flowing through the armature core 10 includes a large number of harmonics, and the flux density increases. However, the effect of reducing iron loss in the armature core 10 is large, whereby torque can be generated with high efficiency.

### Application to compressor

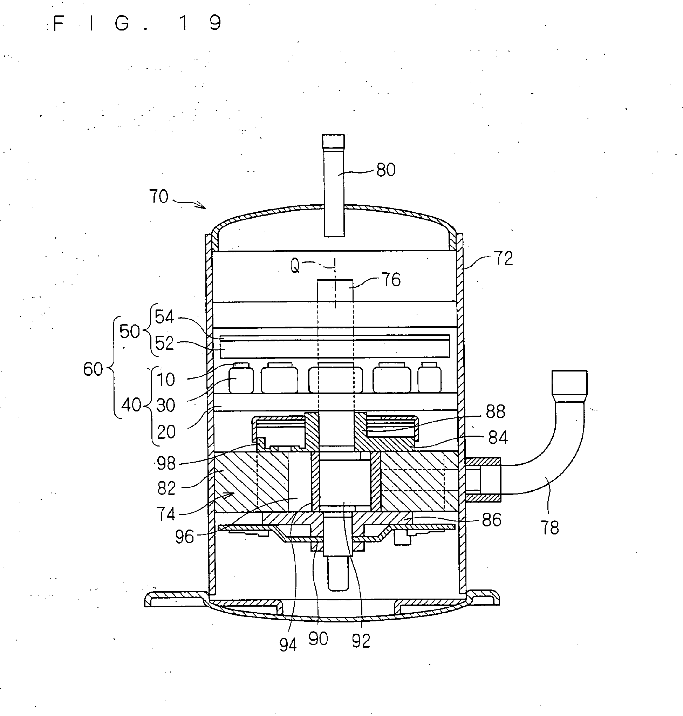

FIG. 19 is a cross-sectional view showing a high-pressure dome-type compressor 70 in which the axial gap motor 60 is mounted. The rotary electric machine 60 described above can be mounted in, for example, the compressor 70. Note that as to the axial gap motor 60, not a cross section but a lateral surface is shown.

This compressor 70 includes a hermetic container 72, a compression mechanism portion 74 and the axial gap motor 60. The compression mechanism portion 74 is disposed in the hermetic container 72. The axial gap motor 60 is disposed in the hermetic container 72 and on an upper side of the compression mechanism portion 74. The compression mechanism portion 74 is driven by the axial gap motor 60 via a rotation shaft 76. Here, the above-mentioned armature 40 and field element 50 function as a stator and a rotor, respectively.

A suction pipe 78 is connected to a lateral side of the hermetic container 72 on a lower side, while a discharge pipe 80 is connected to an upper side of the hermetic container 72. A refrigerant gas supplied from the suction pipe 78 is guided to an intake side of the compression mechanism portion 74. An outer circumference side of the yoke 20 is fixed to an inner side of the hermetic container 72, to thereby fix the axial gap motor 60. In addition, a lower end side of the rotation shaft 76 is coupled to the compression mechanism portion 74.

The compression mechanism portion 74 includes a cylinder-shaped main body 82, an upper end plate 84 and a lower end plate 86. The upper end plate 84 and the lower end plate 86 are mounted onto an upper opening end and a lower opening end of the main body 82, respectively. The rotation shaft 76 penetrates through the upper end plate 84 and the lower end plate 86, and is inserted into the main body 82.

The rotation shaft 76 is rotatably instructed by a bearing 88 provided to the upper end plate 84 of the compression mechanism portion 74 and a bearing 90 provided to the lower end plate 86 of the compression mechanism portion 74. A crank pin 92 is provided to the rotation shaft 76 within the main body 82. A piston 94 is fitted with the crank pin 92 to be driven. In a compression chamber 96 formed between the piston 94 and a cylinder corresponding thereto, the refrigerant gas is compressed. The piston 94 rotates in a state of being decentered or revolves, to thereby change a volume of the compression chamber 96.

The compression mechanism portion 74 is driven when the axial gap motor 60 rotates, whereby the refrigerant gas is supplied from the suction pipe 78 to the compression mechanism portion 74. As a result, the refrigerant gas is compressed by the compression mechanism portion 74 (in particular, compression chamber 96). The high-pressure refrigerant gas compressed by the compression mechanism portion 74 is discharged from a discharge port 98 of the compression mechanism portion 74 to an inner side of the hermetic container 72. Further, the high-pressure refrigerant gas passes through, for example, a groove (not shown) provided around the rotation shaft 76, a hole (not shown) penetrating through the inner side of the armature 40 (stator) and the inner side of the field element 50 in the rotation axis Q direction, and the space between outer circumference portions of the armature 40 and the field element 50 and the inner surface of the hermetic container 72 to be transmitted to the space of the upper portion of the axial gap motor 60. After that, the high-pressure refrigerant gas is discharged to an outside of the hermetic container 72 via the discharge pipe 80.

### Effect in a case of application to compressor

As described above, the axial gap motor 60 described above is small in size and achieves high torque, which causes small loss in compressing a refrigerant.

While the invention has been shown and described in detail, the foregoing description is in all aspects illustrative and not restrictive. It is therefore understood that numerous modifications and variations can be devised without departing from the scope of the invention.

## Claims

1. An armature core (10, 10a, 10c) formed by laminating a plurality of first magnetic plates (12a, 12b, 12c), comprising:
a prism portion (14) having a length (WB) in a first direction perpendicular to a lamination direction in which said first magnetic plates are laminated and a height in a second direction (Q) perpendicular to said lamination direction and said first direction, the length gradually increasing a width in all or part in the lamination direction; and
a first rectangular solid portion (16, 16a, 16c) being adjacent to said prism portion in said second direction and having a uniform length (WL) in said first direction.

2. The armature core (10, 10a) according to Claim 1, wherein the length (WL) of said first rectangular solid portion (16, 16a) in said first direction is equal to or smaller than a minimum value of the length (WB) of said prism portion in said first direction.

3. The armature core (10c) according to Claim 1, wherein a length (WLc) of said first rectangular solid portion (16c) in said first direction is larger than a maximum value of the length (WB) of said prism portion (14) in said first direction.

4. The armature core (10a) according to any one of Claims 1 to 3, further comprising a flanged portion (18a) at an end portion of said first rectangular solid portion (16a) on a side opposite to said prism portion (14),
wherein a length (WS) of said flanged portion in said first direction is larger than the length (WL) of said first rectangular solid portion in said first direction.

5. An armature (40, 40a, 40c, 40d, 40e, 40f), comprising:
the armature core (10, 10a, 10c) according to any one of Claims 1 to 3;
a yoke (20, 20a, 20c, 20d, 20e, 20f) including a recessed portion (22, 22a, 22c, 22d, 22e, 22f) in which said first rectangular solid portion is buried; and
an armature coil (30, 30a, 30c) wound around said prism portion, wherein:
a plurality of said armature cores are circularly arranged, on said yoke, with a rotation axis (Q) parallel to said second direction as a center; and
edges of said prism portions (14) adjacent to each other are formed or arranged so as to be parallel to each other, the edges being opposed to each other.

6. The armature according to Claim 5, further comprising an elastic member (32; 32d, 32e, 32f) urging said first rectangular solid portion (16, 16d) buried in said recessed portion (22d, 22e, 22f) in a radial direction with said rotation axis (Q) being a center.

7. The armature according to Claim 5, wherein:
said armature core (10d, 10e, 10f) further includes a column portion (15d) being adjacent to said prism portion (14) in said second direction (Q) and having the length (WL) in said first direction, the length decreasing along said lamination direction,
wherein said elastic member (32d, 32e) performs urging in said decreasing direction.

8. The armature according to Claim 5, wherein:
said armature core (10e) further includes, on a side closer to said rotation axis (Q) than said first rectangular solid portion (16d), a second rectangular solid portion (17d) having the length (WL) in said first direction smaller than that of said first rectangular solid portion; and
a length of said recessed portion (22d, 22e, 22f) fitted with said second rectangular solid portion in said lamination direction is larger than a length of said second rectangular solid portion in said lamination direction.

9. The armature according to Claim 6, wherein said first magnetic plate (12u) having an end portion in said lamination direction among said first magnetic plates (12d) includes said elastic member (32e).

10. The armature according to Claim 9, wherein said elastic member (32d) includes a projection (32e) projecting, at the end portion in said lamination direction, from said first magnetic plate (12u) toward said recessed portion (22d).

11. An armature (40, 40a), comprising:
the armature core (10, 10a) according to Claim 2; and
an armature coil (30, 30a) including a separately prepared air-core coil attached to said prism portion (14).

12. An armature (40c), comprising:
the armature core (10c) according to any one of Claims 1 to 3; and
an armature coil (30c) series-wounded around said prism portion (14) directly or via an insulator.

13. The armature (40, 40c) according to Claim 5, wherein said yoke (20, 20c) is formed by laminating a plurality of second magnetic plates (24, 24c) in said rotation axis (Q) direction.

14. The armature according to Claim 6, wherein:
said yoke (20e) is formed by laminating a plurality of second magnetic plates (24e) in said rotation axis (Q) direction; and
at least one of said plurality of second magnetic plates includes a projection (32q) projecting from an edge of said recessed portion (22e) toward said recessed portion.

15. The armature according to Claim 14, wherein a length (L1) of said projection (32q) from the edge of said recessed portion (22e) is smaller than a depth (L0) of said recessed portion.

16. The armature according to Claim 14, wherein said second magnetic plate on one side in said rotation axis (Q) direction with respect to said second magnetic plate including said projection (32q) among said second magnetic plates (24e) includes a notch (34e) accommodating said projection at a position corresponding to said projection.

17. The armature (40a) according to Claim 5, wherein said yoke (20a) is formed by powder compacting.

18. The armature (40a) according to Claim 5, wherein:
said yoke (20a) includes a recessed portion (22a) in which said first rectangular solid portion (16) is buried; and
said recessed portion is open also toward an outer side in said radial direction with said rotation axis (Q) being a center.

19. The armature (40c) according to Claim 5, wherein:
said yoke (20c) includes a recessed portion (22c) in which said first rectangular solid portion (16c) is buried; and
said recessed portion is open also toward an inner side in said radial direction with said rotation axis (Q) being a center.

20. The armature (40, 40c) according to Claim 5, wherein a length (WL, WLc) of said first rectangular solid portion (16, 16c) in said first direction is equal to or smaller than a length (2πr/n, 2πc/nc) obtained by dividing a circumference of a circle (2πr, 2πrc) by the number (n, nc) of said armature cores buried in said recessed portions (22, 22c) of said yoke (20, 20c), where the circle having, as a radius, a length (r, rc) from said rotation axis (Q) being a center to a position of said armature core (10,10a, 10c) closest to said rotation axis.

21. The armature (40c) according to Claim 20, wherein the length (WLc) of said first rectangular solid portion (16c) in said first direction is substantially equal to the length (2πrc/nc) obtained by dividing the circumference of a circle (2πrc) by the number (nc) of said armature cores buried in said recessed portions (22c) of said yoke (20c), where the circle having, as a radius, the length (rc) from said rotation axis (Q) being the center to the position of said armature core (10c) closest to said rotation axis.

22. The armature (40c) according to Claim 21, wherein said yoke (20c) is short-circuited on an outer side in said radial direction than said armature core (10c) and on a side opposite to a side on which said armature cores are buried in said yoke.

23. The armature (40c) according to Claim 5, wherein said yoke (20c) further includes a bottom (26c) on a side opposite to a side on which said armature cores (10c) are buried.

24. The armature (40c) according to Claim 13, wherein:
said bottom (26c) and said second magnetic plates (24c) are composed of thin plates laminated in said rotation axis (Q) direction; and
a thickness of the thin plate constituting said bottom in said rotation axis direction is larger than a thickness of the thin plate constituting one of said second magnetic plates in said rotation axis direction.

25. The armature (40c) according to Claim 24, wherein said bottom (26c) is formed of non-magnetic metal.

26. A rotary electric machine (60), comprising:
the armature (40, 40a, 40c) according to Claim 5; and
a field element (50) disposed so as to be opposed to said armature core (10, 10a, 10c) along said rotation axis (Q).

27. The rotary electric machine (60) according to Claim 26, wherein said field element (50) includes a magnet (52) generating a magnetic field flux.

28. A compressor (70), in which the rotary electric machine (60) according to Claim 26 is mounted.
